# EUROPEAN PATENT SPECIFICATION

(11) **EP 4 455 495 B1**
(45) Date of publication and mention of the grant of the patent: **14.10.2026**
(21) Application number: 24200250.9
(22) Date of filing: 04.03.2019
(51) Int. Cl.: F16B 23/00

(54) **ANTI-SLIPPAGE FASTENER**
RUTSCHHEMMENDES BEFESTIGUNGSELEMENT
DISPOSITIF DE FIXATION ANTI-GLISSEMENT

(30) Priority: 02.03.2018 US 201862637692 P; 07.11.2018 US 201862756938 P
(43) Date of publication of application: 30.10.2024
(60) Divisional application: 26204078.5
(62) Document number(s) of the earlier application(s) in accordance with Art. 76 EPC: 19760616.3 / 3 759 364
(73) Proprietor: Grip Holdings LLC, Brandon, FL 33510 (US)
(72) Inventor: KUKUCKA, Paul, Brandon, Florida 33509 (US); KUKUCKA, Thomas Stefan, Brandon, Florida 33509 (US)
(74) Representative: Loo, Chi Ching

(56) References cited:
- EP-A1- 1 731 774
- WO-A1-2013/028875
- DE-A1- 10 321 284
- DE-A1- 102013 021 238
- DE-A1- 4 321 325
- DE-U1- 9 403 220
- US-A- 3 908 489
- US-A- 4 607 547
- US-A1- 2009 220 321
- US-A1- 2016 223 005
- US-A1- 2018 003 241
- US-B2- 7 225 710

## Description

### FIELD OF THE INVENTION

The present invention relates generally to fastener designs. More specifically, the present invention is an anti-slippage fastener, designed to prevent damage and stripping when said fastener is tightened or extracted.

### BACKGROUND OF THE INVENTION

Hex bolts, nuts, screws, and other similar threaded devices are used to secure and hold multiple components together by being engaged to a complimentary thread, known as a female thread. The general structure of these types of fasteners is a cylindrical shaft with an external thread and a head at one end of the shaft. The external thread engages a complimentary female thread tapped into a hole or a nut and secures the fastener in place, fastening the associated components together. The head receives an external torque force and is the means by which the fastener is turned, or driven, into the female threading. The head is shaped specifically to allow an external tool like a wrench to apply a torque to the fastener in order to rotate the fastener and engage the complimentary female threading to a certain degree. This type of fastener is simple, extremely effective, cheap, and highly popular in modern construction.

One of the most common problems in using these types of fasteners, whether male or female, is the tool slipping in the head portion, or slipping on the head portion. This is generally caused by either a worn fastener or tool, corrosion, overtightening, or damage to the head portion of the fastener. The present invention is a fastener design that virtually eliminates slippage, when used in conjunction with the appropriate matching tool. The design uses a series of segmented portions that bite into the head of the fastener and allow for efficient torque transfer between the driving bit and the head portion of the fastener. The present invention eliminates the need for the common bolt extractors as they require unnecessary drilling and tools. With the development of electric screwdrivers, and drills, people have been using, power tools to apply the required torsional forces and remove various fasteners. Most driver end bits have a standardized one fourth inch hex holder and come in various configurations including but not limited to, square end, hex end, or star end.

From DE4321325A1 there is known a screw-in fixture component for screwing tools having work end polygonal in cross-section.

### BRIEF DESCRIPTION OF THE DRAWINGS

FIG. **1** is a perspective view of the present invention.
FIG. **2** is a sectional cut of the present invention depicted in FIG. **1****.**
FIG. **3** is a perspective view of an alternative embodiment not in accordance with the present invention.
FIG. **4** is a sectional cut of the present invention depicted in FIG. **3****.**
FIG. **5** is a perspective view of an alternative embodiment not in accordance with the present invention.
FIG. **6** is a perspective view of an alternative embodiment not in accordance with the present invention.
FIG. **7** is a perspective view of an alternative embodiment not in accordance with the present invention.
FIG. **8** is a perspective view of an alternative embodiment not in accordance with the present invention.
FIG. **9** is a perspective view of an alternative embodiment not in accordance with the present invention.
FIG. **10** is a perspective view of an alternative embodiment not in accordance with the present invention.
FIG. **11** is a perspective view of an alternative embodiment of the present invention.

### DETAIL DESCRIPTIONS OF THE INVENTION

All illustrations of the drawings are for the purpose of describing selected versions of the present invention and are not intended to limit the scope of the present invention.

The present invention generally relates to fasteners such as screws and bolts. The present invention is an anti-slippage fastener that utilizes a specific head design to ensure that there is no slipping in between a torque tool device and the present invention. Resultantly, a significant amount of torque may be applied to the present invention for tightening or loosening purposes without causing damage. This is especially useful for extraction as the traditional means of extracting a seized fastener include damaging the fastener.

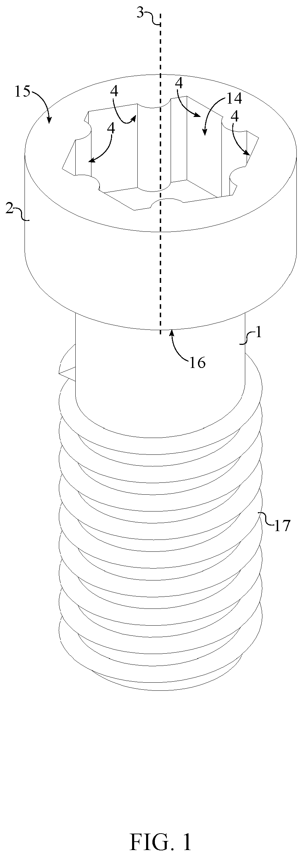

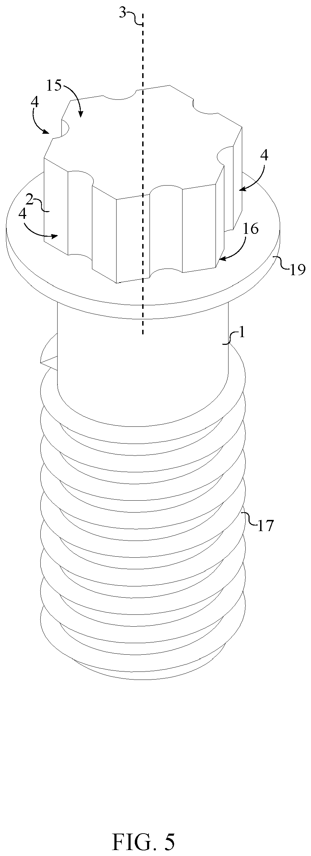

Referring to FIG. **1** and FIG. **5****,** the anti-slippage fastener comprises a fastener head **2,** a shank **1,** and an external threading **17.** The fastener head **2** acts as the interface portion of the present invention that receives a torque force from an external torque tool. Specifically, the fastener head **2** comprises a rotation axis **3,** a plurality of engagement walls **4,** a first base **15,** and a second base **16.** Each of the plurality of engagement walls **4** interlock and grip the external torque tool to efficiently receive and transfer a torque force from the external torque tool to the shank **1.** The plurality of engagement walls **4** is radially distributed about the rotation axis **3;** wherein, the number within the plurality of engagement walls **4** is subject to change. Additionally, each of the engagement walls comprises a first transversal line **6,** a second transversal line **8,** and a partially-circular portion **10.** The first transversal line **6** and the second transversal line **8** make up the straight and flat portion for each of the plurality of engagement walls **4.** The partially-circular portion **10** is a semi-circular line that acts as the interlocking feature for the each of the plurality of engagement walls **4** to prevent slippage and increase the amount of torque force the fastener head **2** may receive without damage and slippage. The curvature, size, and location of the partially-circular portion **10** is subject to change. In one embodiment, the partially circular portion **10** may be different shape including, but not limited to, triangular, rectangular, or square shaped. A rounded profile is used to decrease the number of potential high stress points, thus decreasing potential points where the fastener head **2** might break or slip. Specifically, the first transversal line **6** is terminally connected to the partially-circular portion **10.** Opposite the first transversal line **6,** the second transversal line **8** is terminally connected to the partially-circular portion **10.** It is preferred that the first transversal line **6** and the second transversal line **8** are colinearly aligned with each other and, therefore, are parallel to each other. Furthermore, the partially-circular portion **10** is configured such that a center **11** of the partially-circular portion **10** is oriented away from the rotation axis **3.** The first base **15** and the second base **16** are positioned parallel and opposite to each other, across the plurality of engagement walls **4.** Additionally, the first base **15** and the second base **16** are oriented perpendicular to each of the plurality of engagement walls **4.** Resultantly, the plurality of engagement walls **4,** the first base **15,** and the second base **16** delineate a prism shape for the fastener head **2.**

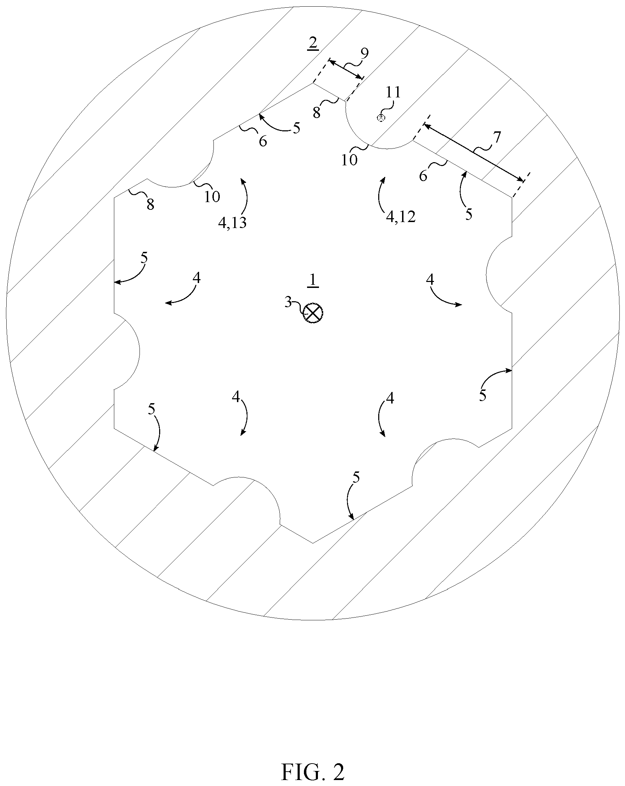

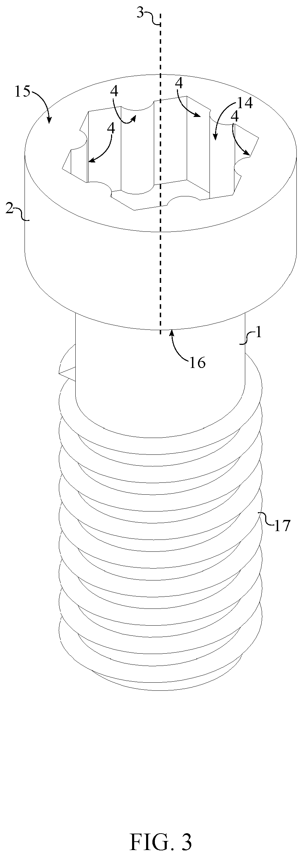

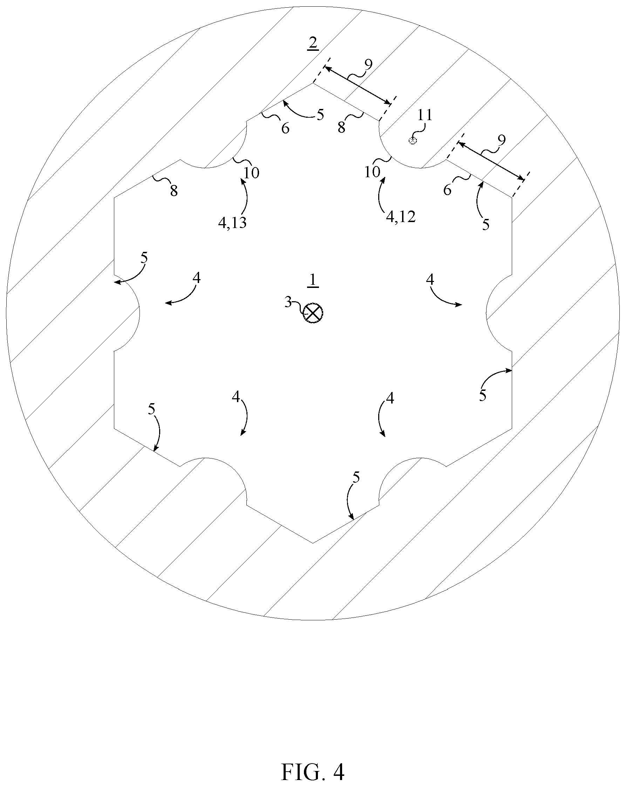

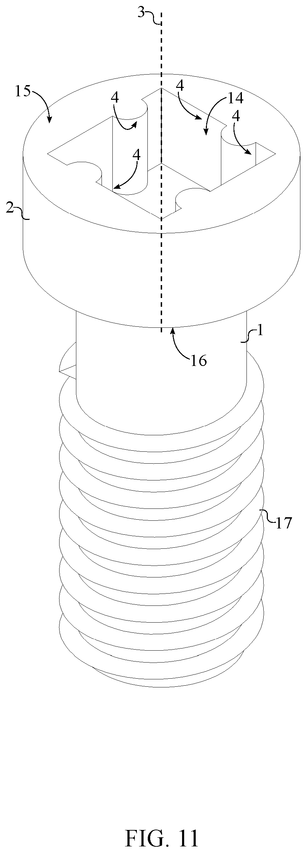

Referring to FIG. **2****,** the plurality of engagement walls **4** comprises an arbitrary engagement wall **12** and an adjacent engagement wall **13.** The arbitrary engagement wall **12** is any feature within the plurality of engagement walls **4** and the adjacent engagement wall **13** is the feature directly next to the arbitrary engagement wall **12.** In relation to each other the plurality of engagement walls **4,** the second transversal line **8** of the arbitrary engagement wall **12** is terminally connected to the first transversal line **6** of the adjacent engagement wall **13,** opposite the partially-circular portion **10** of the adjacent engagement wall **13.** As mentioned above, the present invention may be designed to fit a variety of torque-tools. This is achieved by varying the number of engagement walls within the plurality of engagement walls **4** to compliment different types of torque-tools. The number within the plurality of engagement walls **4** corresponds to the number of sides of the fastener head **2.** For instance, for a pentagon shaped fastener head **2,** there are five engagement walls within the plurality of engagement walls **4.** A hexagon shaped fastener head **2** requires six engagement walls within the plurality of engagement walls **4,** an example is seen in FIG. **3** and FIG. **4****.** In one embodiment, the fastener head **2** is implemented as a square prism. For this, a quantity for the plurality of engagement walls **4** is four. Additionally, for this, the second transversal line **8** of the arbitrary sidewall is terminally connected to the first transversal line **6** of the adjacent sidewall at right angle as seen in FIG. **11****.**

The shank **1** is an elongated cylinder that makes up the body of the present invention. The length and diameter of the shank **1** is subject to change to meet the needs and preferences of the user. The external threading **17** is a helical structure used to convert between rotational and linear movement. Additionally, the external threading **17** engages a complimentary female threading of an external structure to secure and attach the present invention to the external structure. The shank **1** is concentrically and terminally mounted to the fastener head **2,** similar to traditional screw designs. Specifically, the shank **1** is terminally and normally connected to the second base **16.** The external threading **17** extends along the shank **1** and is laterally connected to the shank **1.** The specific characteristics of the external threading **17,** such as lead, pitch, and start, are subject to change to meet the needs and preferences of the user.

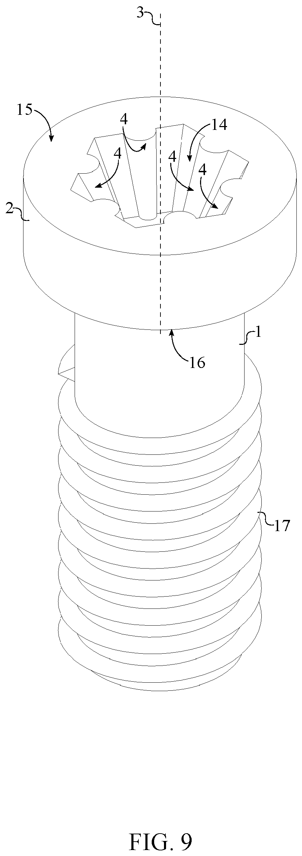

Referring to FIG. **1****,** FIG. **9****,** and FIG. **10****,** the fastener head **2** may be implemented as a socket fastener. In this embodiment, the fastener head **2** is outwardly extending from the cross section **5** of each of the plurality of engagement walls **4.** In other words, the body of the fastener head **2** is external to the plurality of engagement walls **4** and the plurality of engagement walls **4** delineate a tool-receiving cavity **14.** To engage and rotate this embodiment of the present invention, a torque-tool with a bit shank **1** is used and positioned within the tool-receiving cavity **14;** a complimentary profile matching the profile of the plurality of engagement walls **4** is preferred, although, alternative profiles may be used as well. In one embodiment of the present invention, the plurality of engagement walls **4** tapers the tool-receiving cavity **14** from the first base **15** to the second base **16.** The tapering feature allows for torque-tools of varying size to engage the fastener head **2,** thus increasing the versatility of the present invention. For the socket fastener embodiment of the present invention, an edge between each of the plurality of engagement walls **4** and the second base **16** may be chamfered or rounded.

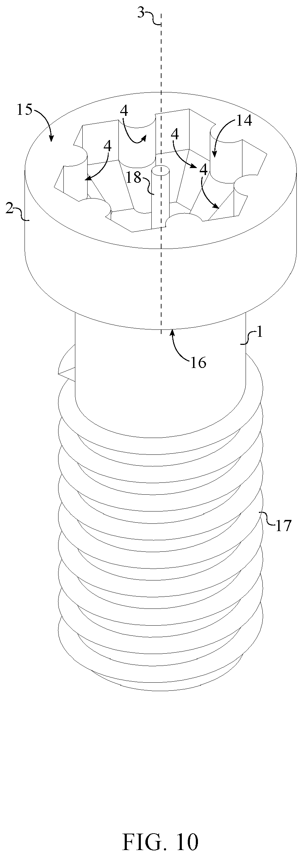

Referring to FIG. **10****,** in one embodiment, the anti-slippage fastener further comprises a security pin **18.** The security pin **18** ensures that only specific torque-tools are capable of engaging the socket fastener embodiment of the present invention, thus restricting the tightening or extracting of the present invention to only personnel with the appropriate equipment. The security pin **18** is an elongated cylinder that length of the fastener head **2** from the first base **15** to the second base **16.** The security pin **18** is concentrically positioned within the rotation axis **3** and is mounted within the tool-receiving cavity **14.** Thus, to engage the present invention, a torque-tool with a complimentary cavity is required.

Referring to FIG. **5****,** the anti-slippage fastener may further comprise an annular flange **19** that acts similar to a washer to distribute the load to the surface of the external structure that the anti-slippage fastener is attached to. The annular flange **19** is a disk with a central hole, wherein the central hole is sized to the outer diameter of the shank **1.** The annular flange **19** is concentrically positioned within the rotation axis **3** and positioned adjacent to the fastener head **2.** Additionally, the annular flange **19** is laterally connected to shank **1.** The outer diameter, thickness, and design of the annular flange **19** is subject to change. When the anti-slippage fastener is tightened into an external structure, the annular flange **19** sits directly against the external surface of the external structure and prevents the fastener head **2** from being driven into the external surface.

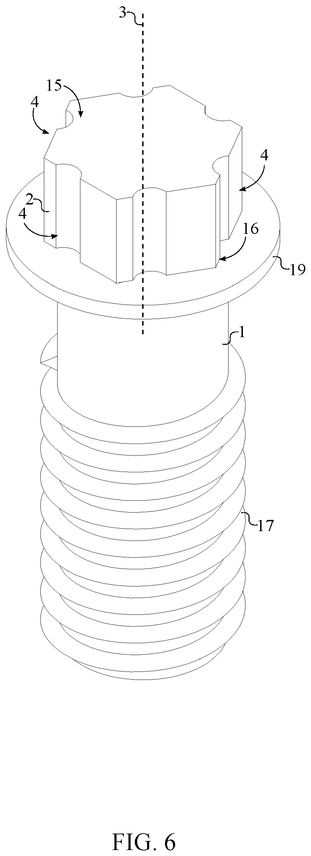

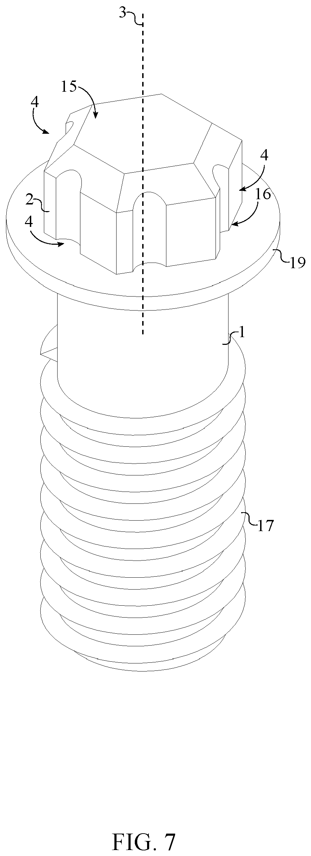

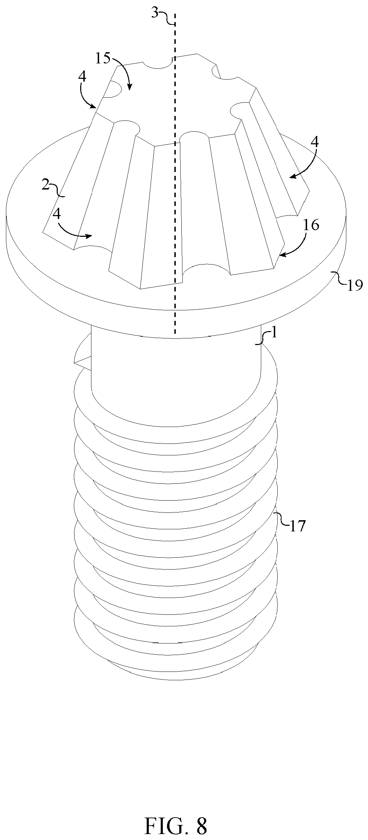

Referring to FIG. **5****,** FIG. **6****,** FIG. **7****,** and FIG. **8****,** the fastener head **2** may be implemented as a standard screw head. The fastener head **2** is laterally delineated by the cross section **5** of each of the plurality of engagement walls **4.** In this embodiment, the body of the fastener head **2** is within the cross section **5** of the plurality of engagement walls **4** such that a torque-tool with a socket is required to engage the fastener head **2.** In this embodiment, the partially- circular portion for each of the plurality of engagement walls **4** is a cavity. In one embodiment, the fastener head **2** tapers from the second base **16** to the first base **15** to allow a range of socket size to fit over and interlock with the fastener head **2** of the anti-slippage fastener, thus increasing the versatility of the anti-slippage fastener. For the standard screw embodiment of the anti-slippage fastener, an edge between each of the plurality of engagement walls **4** and the first base **15** may be chamfered or rounded. Additionally, for the standard screw embodiment, a security recess may be used. The security recess is a cavity that is positioned concentric with the rotation axis **3.** Additionally, the security recess normally traverses into the fastener head **2** from the first base **15** to the second base **16.**

Referring to FIG. **2** and FIG. **4****,** each of the plurality of engagement walls **4** may be implemented in a multitude of designs to create varying secure designs. In one embodiment not in accordance with the invention, referring to FIG. **4****,** a length **7** of the first transversal line **6** is equal to a length **9** of the second transversal line **8.** This outlines a symmetrical design wherein the partially-circular portion **10** is centrally located and provides equal traction for tightening and loosening of the present invention. In another embodiment of the present invention, the length **7** of the first transversal line **6** is greater than the length **9** of the second transversal line **8** as seen in FIG. **2****.** Thus, the partially-circular portion **10** is positioned offset from the center of the corresponding wall from the plurality of engagement walls **4.** This ensures adequate torque force is transferred to the present invention in the clockwise rotation for tightening purposes. In another embodiment, the present invention is implemented for extracting purposes. In this embodiment, the length **7** of the first transversal line **6** is less than the length **9** of the second transversal line **8.** This ensures adequate torque force is transferred to the present invention in the counter-clockwise rotation for extraction purposes.

Although the invention has been explained in relation to its preferred embodiment, it is to be understood that many other possible modifications and variations can be made without departing from the scope of the invention as hereinafter claimed.

## Claims

1. An anti-slippage fastener comprising:
a shank (1);
a fastener head (2);
an external threading (17);
the fastener head (2) comprising a rotation axis (3) and a plurality of engagement walls (4);
the plurality of engagement walls (4) being radially distributed about the rotation axis (3);
a cross section (5) for each of the plurality of engagement walls (4) comprising a first transversal line (6), a second transversal line (8), and an interlocking portion;
the interlocking portion comprising a center and a protrusion;
wherein the fastener head (2) is outwardly extended from the cross section (5) of each of the plurality of engagement walls (4);
the plurality of engagement walls (4) delineating a tool-receiving cavity;
the first transversal line (6) being terminally connected to the interlocking portion;
the second transversal line (8) being terminally connected to the interlocking portion, opposite the first transversal line (6);
a length (7) of the first transversal line (6) being greater than or less than a length (9) of the second transversal line (8);
the interlocking portion facing inward, wherein the distance from the center to the rotation axis is greater than the distance from the protrusion to the rotation axis;
the shank (1) being concentrically and terminally mounted to the fastener head (2);
the external threading (17) extending along the shank (1); and
the external threading (17) being laterally connected to the shank (1).

2. The anti-slippage fastener as claimed in claim 1 comprising:
the fastener head (2) further comprising a first base (15) and a second base (16);
the first base (15) and the second base (16) being positioned parallel and opposite to each other across the plurality of engagement walls (4);
the first base (15) and the second base (16) each being oriented perpendicular to each of the plurality of engagement walls (4); and
the shank (1) being terminally connected to the second base (16).

3. The anti-slippage fastener as claimed in claim 1 comprising:
the plurality of engagement walls (4) comprising an arbitrary engagement wall (12) and an adjacent engagement wall (13); and
the second transversal line (8) of the arbitrary engagement wall (12) being terminally connected to the first transversal line (6) of the adjacent engagement wall (13), opposite the interlocking portion of the adjacent engagement wall (13).

4. The anti-slippage fastener as claimed in claim 1 comprising:
the second transversal line (8) of the arbitrary engagement wall (12) being terminally connected to the first transversal line (6) of the adjacent engagement wall (13) at a right angle;
wherein a quantity for the plurality of engagement walls (4) is four.

5. The anti-slippage fastener as claimed in claim 1 comprising:
the fastener head (2) further comprising a first base (15) and a second base (16);
the first base (15) and the second base (16) being positioned parallel and opposite to each other across the plurality of engagement walls (4); and
the shank (1) being terminally connected to the second base (16).

6. The anti-slippage fastener as claimed in claim 5, wherein the plurality of engagement walls (4) tapers the tool-receiving cavity (14) from the first base (15) to the second base (16);

7. The anti-slippage fastener as claimed in claim 5 comprising:
a security pin (18);
the security pin (18) being concentrically positioned with the rotation axis (3); and
the security pin (18) being mounted within the tool-receiving cavity (14).

8. The anti-slippage fastener as claimed in claim 1, wherein the first transversal line (6) and the second transversal line (8) are positioned colinear with each other.

9. The anti-slippage fastener as claimed in claim 1 comprising:
an annular flange (19);
the annular flange (19) being concentrically positioned with the rotation axis (3);
the annular flange (19) being positioned adjacent to the fastener head (2); and
the annular flange (19) being laterally connected to the shank (1).

10. The anti-slippage fastener as claimed in claim 1 comprising:
the fastener head (2) being laterally delineated by the cross section (5) of each of the plurality of engagement walls (4).

## Patentansprüche

1. Rutschsicheres Befestigungselement, umfassend:
einen Schaft (1);
einen Befestigungselementkopf (2);
ein Außengewinde (17);
wobei der Befestigungselementkopf (2) eine Drehachse (3) und eine Vielzahl von Eingriffswänden (4) umfasst;
wobei die Vielzahl von Eingriffswänden (4) radial um die Drehachse (3) verteilt ist;
wobei ein Querschnitt (5) für jede von der Vielzahl von Eingriffswänden (4) eine erste Querlinie (6), eine zweite Querlinie (8) und einen Verzahnungsabschnitt umfasst;
wobei der Verzahnungsabschnitt eine Mitte und einen Vorsprung umfasst;
wobei der Befestigungselementkopf (2) von dem Querschnitt (5) jeder von der Vielzahl von Eingriffswänden (4) nach außen erweitert ist;
die Vielzahl von Eingriffswänden (4) eine Werkzeugaufnahmeaussparung abgrenzt;
die erste Querlinie (6) abschließend mit dem Verzahnungsabschnitt verbunden ist;
die zweite Querlinie (8) abschließend mit dem Verzahnungsabschnitt verbunden ist, entgegengesetzt zu der ersten Querlinie (6);
eine Länge (7) der ersten Querlinie (6) größer als oder kleiner als eine Länge (9) der zweiten Querlinie (8) ist;
der Verzahnungsabschnitt nach außen weist, wobei der Abstand von der Mitte zu der Drehachse größer als der Abstand von dem Vorsprung zu der Drehachse ist;
der Schaft (1) konzentrisch und abschließend an dem Befestigungselementkopf (2) montiert ist;
das Außengewinde (17) sich entlang dem Schaft (1) erstreckt; und
das Außengewinde (17) lateral mit dem Schaft (1) verbunden ist.

2. Rutschsicheres Befestigungselement nach Anspruch 1, umfassend:
der Befestigungselementkopf (2) umfasst weiterhin eine erste Basis (15) und eine zweite Basis (16);
die erste Basis (15) und die zweite Basis (16) sind parallel und entgegengesetzt zueinander über die Vielzahl von Eingriffswänden (4) positioniert;
die erste Basis (15) und die zweite Basis (16) sind senkrecht zu jeder von der Vielzahl von Eingriffswänden (4) ausgerichtet; und
der Schaft (1) ist abschließend mit der zweiten Basis (16) verbunden.

3. Rutschsicheres Befestigungselement nach Anspruch 1, umfassend:
die Vielzahl von Eingriffswänden (4) umfasst eine willkürliche Eingriffswand (12) und eine angrenzende Eingriffswand (13); und
die zweite Querlinie (8) der willkürlichen Eingriffswand (12) ist abschließend mit der ersten Querlinie (6) der angrenzenden Eingriffswand (13) verbunden, entgegengesetzt zu dem Verzahnungsabschnitt der angrenzenden Eingriffswand (13).

4. Rutschsicheres Befestigungselement nach Anspruch 1, umfassend:
die zweite Querlinie (8) der willkürlichen Eingriffswand (12) ist abschließend im rechten Winkel mit der ersten Querlinie (6) der angrenzenden Eingriffswand (13) verbunden;
wobei eine Anzahl für die Vielzahl von Eingriffswänden (4) vier ist.

5. Rutschsicheres Befestigungselement nach Anspruch 1, umfassend:
der Befestigungselementkopf (2) umfasst weiterhin eine erste Basis (15) und eine zweite Basis (16);
die erste Basis (15) und die zweite Basis (16) sind parallel und entgegengesetzt zueinander über die Vielzahl von Eingriffswänden (4) positioniert; und
der Schaft (1) ist abschließend mit der zweiten Basis (16) verbunden.

6. Rutschsicheres Befestigungselement nach Anspruch 5, wobei die Vielzahl von Eingriffswänden (4) die Werkzeugaufnahmeaussparung (14) von der ersten Basis (15) zu der zweiten Basis (16) verjüngt.

7. Rutschsicheres Befestigungselement nach Anspruch 5, umfassend:
einen Sicherungsstift (18);
wobei der Sicherungsstift (18) konzentrisch mit der Drehachse (3) positioniert ist; und
der Sicherungsstift (18) innerhalb der Werkzeugaufnahmeaussparung (14) montiert ist.

8. Rutschsicheres Befestigungselement nach Anspruch 1, wobei die erste Querlinie (6) und die zweite Querlinie (8) kolinear miteinander positioniert sind.

9. Rutschsicheres Befestigungselement nach Anspruch 1, umfassend:
einen ringförmigen Flansch (19);
wobei der ringförmige Flansch (19) konzentrisch mit der Drehachse (3) positioniert ist;
der ringförmige Flansch (19) angrenzend an den Befestigungselementkopf (2) positioniert ist; und
der ringförmige Flansch (19) lateral mit dem Schaft (1) verbunden ist.

10. Rutschsicheres Befestigungselement nach Anspruch 1, umfassend:
der Befestigungselementkopf (2) ist durch den Querschnitt (5) jeder von der Vielzahl von Eingriffswänden (4) lateral abgegrenzt.

## Revendications

1. Dispositif de fixation anti-glissement comprenant :
une tige (1) ;
une tête de fixation (2) ;
un filetage extérieur (17) ;
la tête de fixation (2) comprenant un axe de rotation (3) et une pluralité de parois de mise en prise (4) ;
la pluralité de parois de mise en prise (4) étant réparties radialement autour de l'axe de rotation (3) ;
une section transversale (5) pour chacune de la pluralité de parois de mise en prise (4) comprenant une première ligne transversale (6), une seconde ligne transversale (8), et une partie d'emboîtement ;
la partie d'emboîtement comprenant un centre et une saillie ;
dans lequel la tête de fixation (2) est étendue vers l'extérieur à partir de la section transversale (5) de chacune de la pluralité de parois de mise en prise (4) ;
la pluralité de parois de mise en prise (4) délimitant une cavité de réception d'outil ;
la première ligne transversale (6) étant reliée de manière terminale à la partie d'emboîtement ;
la seconde ligne transversale (8) étant reliée de manière terminale à la partie d'emboîtement, opposée à la première ligne transversale (6) ;
une longueur (7) de la première ligne transversale (6) étant supérieure ou inférieure à une longueur (9) de la seconde ligne transversale (8) ;
la partie d'emboîtement étant orientée vers l'intérieur, dans lequel la distance du centre à l'axe de rotation est supérieure à la distance de la saillie à l'axe de rotation ;
la tige (1) étant montée concentriquement et de manière terminale sur la tête de fixation (2) ;
le filetage extérieur (17) s'étendant le long de la tige (1) ; et
le filetage extérieur (17) étant relié latéralement à la tige (1).

2. Dispositif de fixation anti-glissement selon la revendication 1 comprenant :
la tête de fixation (2) comprenant en outre une première base (15) et une seconde base (16) ;
la première base (15) et la seconde base (16) étant positionnées parallèlement et opposées l'une à l'autre sur la pluralité de parois de mise en prise (4) ;
la première base (15) et la seconde base (16) étant chacune orientées perpendiculairement à chacune de la pluralité de parois de mise en prise (4) ; et
la tige (1) étant reliée de manière terminale à la seconde base (16).

3. Dispositif de fixation anti-glissement selon la revendication 1 comprenant :
la pluralité de parois de mise en prise (4) comprenant une paroi de mise en prise arbitraire (12) et une paroi de mise en prise adjacente (13) ; et
la seconde ligne transversale (8) de la paroi de mise en prise arbitraire (12) étant reliée de manière terminale à la première ligne transversale (6) de la paroi de mise en prise adjacente (13), opposée à la partie d'emboîtement de la paroi de mise en prise adjacente (13).

4. Dispositif de fixation anti-glissement selon la revendication 1 comprenant :
la seconde ligne transversale (8) de la paroi de mise en prise arbitraire (12) étant reliée de manière terminale à la première ligne transversale (6) de la paroi de mise en prise adjacente (13) à angle droit ;
dans lequel une quantité pour la pluralité de parois de mise en prise (4) est de quatre.

5. Dispositif de fixation anti-glissement selon la revendication 1 comprenant :
la tête de fixation (2) comprenant en outre une première base (15) et une seconde base (16) ;
la première base (15) et la seconde base (16) étant positionnées parallèlement et opposées l'une à l'autre sur la pluralité de parois de mise en prise (4) ; et
la tige (1) étant reliée de manière terminale à la seconde base (16).

6. Dispositif de fixation anti-glissement selon la revendication 5, dans lequel la pluralité de parois de mise en prise (4) effilent la cavité de réception d'outil (14) de la première base (15) à la seconde base (16) ;

7. Dispositif de fixation anti-glissement selon la revendication 5 comprenant :
une goupille de sécurité (18) ;
la goupille de sécurité (18) étant positionnée concentriquement avec l'axe de rotation (3) ; et
la goupille de sécurité (18) étant montée à l'intérieur de la cavité de réception d'outil (14).

8. Dispositif de fixation anti-glissement selon la revendication 1, dans lequel la première ligne transversale (6) et la seconde ligne transversale (8) sont positionnées de manière colinéaire l'une par rapport à l'autre.

9. Dispositif de fixation anti-glissement selon la revendication 1 comprenant :
une bride annulaire (19) ;
la bride annulaire (19) étant positionnée concentriquement avec l'axe de rotation (3) ;
la bride annulaire (19) étant positionnée adjacente à la tête de fixation (2) ; et
la bride annulaire (19) étant reliée latéralement à la tige (1).

10. Dispositif de fixation anti-glissement selon la revendication 1 comprenant :
la tête de fixation (2) étant délimitée latéralement par la section transversale (5) de chacune de la pluralité de parois de mise en prise (4).
